# EUROPÄISCHE PATENTSCHRIFT

(11) **EP 2 820 587 B1**
(45) Veröffentlichungstag und Bekanntmachung des Hinweises auf die Patenterteilung: **08.04.2020**
(21) Anmeldenummer: 13709754.9
(22) Anmeldetag: 26.02.2013
(51) Int. Cl.: G06F 21/35

(54) **VERFAHREN ZUR COMPUTER-ZUGANGSKONTROLLE MITTELS MOBILEM ENDGERÄT**
METHOD FOR CONTROLLING ACCESS TO A COMPUTER USING A MOBILE TERMINAL
PROCÉDÉ DE CONTRÔLE D'ACCÈS À UN ORDINATEUR AU MOYEN D'UN TERMINAL MOBILE

(30) Priorität: 28.02.2012 DE 102012003886
(43) Veröffentlichungstag der Anmeldung: 07.01.2015
(73) Patentinhaber: Giesecke+Devrient Mobile Security GmbH, 81677 München (DE)
(72) Erfinder: SCHERZER, Helmut, 72070 Tübingen (DE); FINKENZELLER, Klaus, 85774 Unterföhring (DE)
(86) Internationale Anmeldenummer: PCT/EP2013/000561
(87) Internationale Veröffentlichungsnummer: WO 2013/127521

(56) Entgegenhaltungen:
- US-A1- 2002 027 494
- US-A1- 2005 105 734
- US-A1- 2006 010 325
- US-A1- 2006 143 706
- US-A1- 2008 127 311
- MENEZES ET AL: "Handbook of applied cryptography", 1. Januar 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 400 - 405, XP002143934, ISBN: 978-0-8493-8523-0 Seite 404 - Seite 405

## Beschreibung

Die Erfindung betrifft ein Verfahren zur Zugangskontrolle zu einem Computer mittels eines mobilen Endgeräts, gemäß dem Oberbegriff von Anspruch 1, insbesondere wie in DE 10 2004 036 366 A1 beschrieben. Unter einem mobilen Endgerät wird ein Mobiltelefon, Smart Phone oder ähnliches Gerät verstanden.

Zur Absicherung des Zugangs zu einem Computer, z.B. Arbeitsplatzrechner, PC, Server, Notebook, Tablet-PC oder dergleichen, wird in der Regel eine Authentisierung des Nutzers gegenüber dem Computer gefordert, beispielsweise durch Eingabe einer PIN (persönliche Identifikationsnummer). Anlässlich der erfolgreichen Authentisierung wird dem Nutzer der Zugang zum Computer gewährt.

Eine PIN muss sich der Nutzer merken und wird daher häufig vergessen oder leichtfertig gehandhabt, z.B. ausspähbar notiert.

Zugunsten der Benutzerfreundlichkeit im Vergleich zur Nutzung einer PIN wird im Stand der Technik vorgeschlagen, Mobiltelefone zur Zugangskontrolle zu Computern zu verwenden.

DE 10 2004 036 366 A1 und DE 10 2004 036 374 A1 offenbaren Verfahren zum Zugang zu Ressourcen bzw. Firmware eines Computers, wobei, sobald ein Bluetooth-fähiges Mobiltelefon in den Erfassungsbereich einer Bluetooth-Funkschnittstelle (zB USB-Bluetooth-Stick) des Computers gebracht wird, eine Authentisierung durchgeführt wird und der Zugang gewährt wird. Diebstahl des eingeschalteten Mobiltelefons ermöglicht missbräuchlichen Zugang zum Computer. Von DE 10 2004 036 366 A1 wird als nächstliegender Stand der Technik ausgegangen.

EP 2 063 380 A2 offenbart ein benutzerfreundliches Verfahren zur Zugangskontrolle zu einem PC oder ähnlichen Gerät mit RFID-Leser mittels eines Mobiltelefons mit NFC-Modul (bezeichnet als "dritte Anwendungsmöglichkeit"). Ein Nutzer bringt das Mobiltelefon in einen primären Ansprechbereich des PCs, authentisiert sich und entfernt das Mobiltelefon wieder aus dem primären Ansprechbereich. Solange das Mobiltelefon außerhalb des primären, aber innerhalb eines größeren, sekundären Ansprechbereichs des PCs ist, wird der Nutzer als am PC anwesend angenommen. Erst bei Verlassen auch des sekundären Ansprechbereichs wird z.B. die Tastatur des PCs blockiert oder der Bildschirmschoner aktiviert und für den Zugang zum PC eine erneute Authentisierung erforderlich. Verlässt der Nutzer versehentlich den sekundären Ansprechbereich, z.B. wenn er während eines Telefonats mit dem Mobiltelefon im Raum auf und ab geht, ist eine neuerliche Authentisierung erforderlich.

Unter der Bezeichnung ARM Trustzone Architektur ist eine zweigeteilte Laufzeit-Architektur der Firma ARM für ein Mikroprozessorsystem bekannt, die zwei Laufzeitumgebungen umfasst. Eine erste, "Normal Zone" oder "Normal World" genannte unsichere Laufzeitumgebung ist durch ein Normalbetriebssystem gesteuert. Eine zweite, "Trustzone" oder "Trusted World" oder "Secure World" genannte gesicherte oder vertrauenswürdige Laufzeitumgebung ist durch ein Sicherheitsbetriebssystem gesteuert.

Das Normalbetriebssystem kann beispielsweise ein gängiges Betriebssystem wie Android, Windows Phone, Symbian oder dergleichen sein.

Durch die Anmelderin der vorliegenden Patentanmeldung wird unter der Markenbezeichnung MOBICORE ein Sicherheitsbetriebssystem für in mobile Endgeräte zu implementierende Chips hergestellt und vertrieben.

Das Dokument WO 2013/127521 A1 offenbart ein weiteres Verfahren zur Authentisierung, das dem Oberbegriff von Anspruch 1 entspricht. Genauer offenbart WO 2013/127521 A1 ein Verfahren zur Zugangskontrolle zu einem Computer mittels Authentisierung eines mobilen Endgeräts gegenüber dem Computer über Kontaktlosschnittstellen des Computers und Endgeräts. Bei dem Verfahren wird durch den Nutzer persönlich über eine Nutzerschnittstelle Authentisierungsinformation in das mobile Endgerät eingegeben, z.B. ein Fingerabdruck-Scan.

Der Erfindung liegt die Aufgabe zu Grunde, ein besonders benutzerfreundliches und zugleich sicheres Verfahren zur Zugangskontrolle zu einem Computer mittels eines mobilen Endgeräts zu schaffen.

Die Aufgabe wird gelöst durch ein Verfahren nach Anspruch 1. Vorteilhafte Ausgestaltungen der Erfindung sind in den abhängigen Ansprüchen angegeben.

Der Erfinder muss sich hierbei keine Zugangsdaten wie z.B. eine PIN oder ein Passwort merken. Dadurch, dass erst das Zertifikat aus dem Datenträger in das Endgerät geladen wird, ist andererseits sichergestellt, dass der Verlust des eingeschalteten Endgeräts nicht sofort automatisch den Zugang zum Computer ermöglicht. Das Verfahren ist somit sicherer als z.B. die Verfahren aus DE 10 2004 036 366 A1 und DE 10 2004 036 374 A1.

Daher ist gemäß Anspruch 1 ein besonders benutzerfreundliches und zugleich sicheres Verfahren zur Zugangskontrolle zu einem Computer mittels eines mobilen Endgeräts geschaffen.

Anlässlich eines erstmaligen Durchführens der Authentisierung wird vorzugsweise der Zugang zum Computer gewährt, also z.B. der Login am Computer durchgeführt. Anlässlich eines wiederholten Durchführens der Authentisierung wird vorzugsweise der Zugang zum Computer aufrechterhalten, also z.B. der Login am Computer aufrechterhalten.

Als Kontaktlosschnittstellen sind beispielsweise im Endgerät und am Computer NFC-Schnittstellen vorgesehen, wahlweise fest integriert oder angesetzt. Insbesondere beim Computer kann die Kontaktlosschnittstelle in einem separaten ansteckbaren bzw. angesteckten Token, z.B. USB-Token, vorgesehen sein.

Wahlweise wird
- durch die Kontaktlosschnittstelle des Computers zumindest eine Authentisierungs-Einladung ausgesendet, oder/und werden vorzugsweise in regelmäßigen Zeitabständen Authentisierungs-Einladungen ausgesendet, und
- werden anlässlich des Empfangens, durch die Kontaktlosschnittstelle des mobilen Endgeräts, einer Authentisierungs-Einladung, oder vorzugsweise anlässlich jedes Empfangens, durch die Kontaktlosschnittstelle des mobilen Endgeräts, einer Authentisierungs-Einladung, die Authentisierungsdaten vom mobilen Endgerät an den Computer bereitgestellt.

Sobald also das mobile Endgerät im Erfassungsbereich der Kontaktlosschnittstelle des Computers ist, kann es eine Authentisierungs-Einladung des Computers empfangen. In Reaktion auf den Empfang einer Authentisierungs-Einladung wird unmittelbar die Durchführung Authentisierung veranlasst.

Im bevorzugten Fall, dass in regelmäßigen Zeitabständen Authentisierungs-Einladungen ausgesendet werden, führt der Computer mit anderen Worten ein Polling-Verfahren zur Anwesenheitsdetektion gegenüber dem mobilen Endgerät durch, um den Zugang zum Computer anlässlich einer ersten erfolgreichen Authentisierung zu gewähren und anlässlich nachfolgender erfolgreicher Authentisierungen aufrechtzuerhalten.

Der Zeitabstand zwischen zwei aufeinanderfolgenden Authentisierungs-Einladungen liegt wahlweise im Zeitbereich von 10 Sekunden bis 5 Minuten, wahlweise im Zeitbereich von 30 Sekunden bis 5 Minuten, beispielsweise bei ungefähr 1 Minute oder 2 Minuten oder 3 Minuten.

Werden in Reaktion auf eine Authentisierungs-Einladung beim Computer keine oder falsche Authentisierungsdaten empfangen, wird vorzugweise der Zugriff zum Computer - insbesondere, falls er gerade gewährt ist - gesperrt, oder zumindest nicht gewährt.

Gemäß einer Weiterbildung wird
- durch die Kontaktlosschnittstelle des Computers zumindest eine Authentisierungs-Einladung ausgesendet, oder/und werden vorzugsweise in regelmäßigen Zeitabständen Authentisierungs-Einladungen ausgesendet, und
- wird anlässlich des Empfangens, durch die Kontaktlosschnittstelle des mobilen Endgeräts, einer Authentisierungs-Einladung oder zumindest mancher Authentisierungs-Einladungen eine Nutzereingabe angefordert, wobei anlässlich des Eingebens der geforderten Nutzereingabe in das Endgerät die Authentisierungsdaten vom mobilen Endgerät an den Computer bereitgestellt werden.

Gemäß der Weiterbildung führt, für eine oder manche Authentisierungs-Einladungen, der Empfang einer vom Computer gesendeten Authentisierungs-Einladung, z.B. Polling-Nachricht, beim Endgerät nur mittelbar zur Authentisierung. Die Authentisierungs-Einladung provoziert die Ausgabe einer Aufforderung an den Nutzer des Endgeräts, eine Eingabe am Endgerät vorzunehmen, beispielsweise eine Taste der Tastatur oder ein aktives Touch-Feld auf dem Display zu betätigen. Erst in Reaktion auf die Eingabe am Endgerät wird die Authentisierung veranlasst und werden die Authentisierungsdaten an den Computer bereitgestellt. Hierdurch hat der Nutzer des Endgeräts die Möglichkeit, aktiv eine Willenserklärung abzugeben, am Computer Zugang zu erlangen.

Wahlweise wird die Authentisierung gemäß der Weiterbildung, mit Eingabe am Endgerät durch den Nutzer, anlässlich einer ersten Authentisierung durchgeführt, anlässlich derer der Zugang zum Computer gewährt wird. Wahlweise wird bei nachfolgenden Authentisierungen, um den Zugang zum Computer aufrechtzuerhalten, die Authentisierung unmittelbar in Reaktion auf den Empfang einer Authentisierungs-Einladung durchgeführt, ohne Eingabe durch den Nutzer. Hierdurch reicht es, sobald man sich am Computer eingeloggt hat (einen Status Zugang gewährt erlangt hat), das mobile Endgerät ausreichend nahe am Computer zu belassen, um am Computer eingeloggt zu bleiben (um den Status Zugang gewährt aufrechtzuerhalten).

Wahlweise erfolgen alle Authentisierungen ohne Eingabe durch den Nutzer, z.B. unmittelbar in Reaktion auf den Empfang einer Authentisierungs-Einladung, insbesondere auch diejenige Authentisierung, durch welche der Zugang gewährt wird, also durch welche der Nutzer aus dem ausgeloggten Zustand in den eingeloggten Zustand versetzt wird. Ein derartiges Verfahren ohne Eingabe durch den Nutzer ist besonders nutzerfreundlich.

Gemäß einer vorteilhaften Eigenschaft der Erfindung hat das Zertifikat eine zeitlich befristete Gültigkeit, die auf einen vorbestimmten Gültigkeitszeitraum zeitlich befristet ist. Dabei ist eine erfolgreiche Authentisierung mit dem Zertifikat nur höchstens innerhalb des Gültigkeitszeitraums des Zertifikats möglich. Die zeitlich befristete Gültigkeit des Zertifikats hat den Vorteil, dass nach Ablauf des Zertifikats automatisch kein Zugang zum Computer mehr hergestellt werden kann. Der Gültigkeitszeitraum des Zertifikats beträgt beispielsweise 24 Stunden ab Beginn des Tages, an dem das Zertifikat in das mobile Endgerät geladen wurde. Alternativ beträgt der Gültigkeitszeitraum beispielsweise eine oder mehrere Stunden ab Laden des Zertifikats in das Endgeräts. Während des Gültigkeitszeitraums wird der Zugang zum Computer gewährt oder/ und aufrechterhalten, sobald oder solange das mobile Endgerät sich im Erfassungsbereich der Kontaktlosschnittstelle des Computers befindet, ggf. sobald dabei zudem eine Authentisierungs-Einladung empfangen worden ist und daraufhin eine Authentisierung durchgeführt worden ist.

Hierbei wird anlässlich eines Versuchs der Authentisierung, der außerhalb des Gültigkeitszeitraums des Zertifikats durchgeführt wird, gefordert, dass erneut ein Zertifikat in das mobile Endgerät geladen wird, insbesondere aus einem oder dem tragbaren Datenträger in das Endgerät geladen wird.

Wahlweise wird das mobile Endgerät, während die Authentisierung durchgeführt wird oder/ und während die Authentisierungs-Einladung empfangen wird, in einem stromsparenden Modus mit eingeschränkter Funktionalität des Endgeräts betrieben, z.B. in einem Sleep-Modus, in dem insbesondere das Display des Endgeräts ausgeschaltet ist. Hierdurch wird vermieden, dass anlässlich der Authentisierungen stets die vollumfängliche Funktionalität des Endgeräts mit Energie versorgt wird. Somit wird die Energiequelle (Acku) des Endgeräts nur wenig beansprucht und bleibt lange einsatzfähig, ohne wieder mit Energie geladen werden zu müssen.

Wahlweise wird das mobile Endgerät zur Authentisierung, insbesondere anlässlich des Empfangens einer Authentisierungs-Einladung, aus einem extrem stromsparenden ersten Modus, z.B. Standby-Modus, mit extrem eingeschränkter Funktionalität des Endgeräts in einen zweiten Modus versetzt, in dem zumindest die Durchführung der Authentisierung möglich ist. Durch die Authentisierungs-Einladung wird das Endgerät also aufgeweckt und die Authentisierung durchgeführt. Vorzugsweise wird das Endgerät nach der Authentisierung wieder in den ersten Modus zurück versetzt. Der zweite Modus kann dabei wahlweise ebenfalls schon ein energiesparender Modus, z.B. Sleep-Modus, sein, in dem z.B. das Display ausgeschaltet ist. Das Betreiben des Endgeräts in einem noch sparsameren Modus außerhalb der Authentisierungen spart zusätzlich Energie.

Wahlweise umfasst das mobile Endgerät eine gesicherte Laufzeitumgebung und hat z.B. das Sicherheitsbetriebssystem Mobicore in einer ARM Architektur implementiert. In diesem Fall wird das Zertifikat unter Verwaltung der gesicherten Laufzeitumgebung in das mobile Endgerät geladen und die Authentisierungsdaten werden unter Verwaltung der gesicherten Laufzeitumgebung an den Computer bereitgestellt. Hierdurch werden Manipulationen am Zertifikat im Endgerät verhindert. Wahlweise werden im Endgerät das Zertifikat und die Authentisierungsdaten durch eine unter dem Sicherheitsbetriebssystem implementierte Login-Anwendung, ein sogenanntes Login-Trustlet, verwaltet.

Wahlweise werden die Kontaktlosschnittstellen unter Verwendung eines an sich bekannten Verfahrens zur Reichweitenerhöhung, insbesondere Peer-to-Peer-Modus oder/ und aktiver Lastmodulation, betrieben. Hierdurch kann das Endgerät weiter vom Computer entfernt werden, ohne dass das Endgerät am Computer ausgeloggt wird.

Wahlweise wird als tragbarer Datenträger ein elektronisches Identifikationsdokument, z.B. elektronischer Personalausweis nPA oder elektronischer Reisepass ePass, verwendet. Wahlweise wird das Zertifikat in dem Datenträger, z.B. nPA oder ePass, erstellt. Wahlweise wird das Zertifikat unmittelbar als Authentisierungsdaten verwendet.

Wahlweise wird das Bereitstellen der Authentisierungsdaten vom Endgerät an den Computer durch eine Eingabe am Endgerät veranlasst. Diese Variante ist insbesondere vorteilhaft für die Gewährung des Zugriffs, also zum Einloggen, und insbesondere in dem Fall, in dem der Computer in größeren regelmäßigen Zeitabständen Authentisierungseinladungen sendet. Der Nutzer kann sich somit sofort mittels der Eingabe am Endgerät einloggen und muss nicht warten, bis der Computer das Endgerät anpollt. Insbesondere wird bei der Variante durch die Eingabe wahlweise provoziert, dass der Computer eine Authentisierungs-Einladung an das Endgerät sendet, woraufhin das Endgerät die Authentisierungsdaten an den Computer sendet.

Im Folgenden wird die Erfindung an Hand von Ausführungsbeispielen und unter Bezugnahme auf die Zeichnung näher erläutert, in der zeigt:

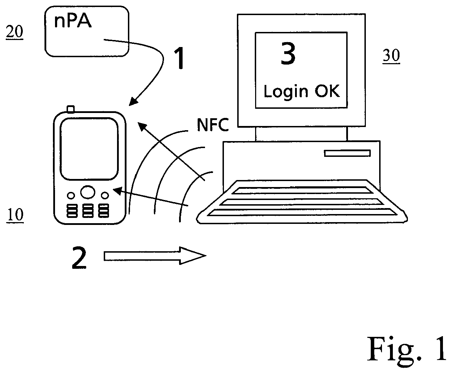

Fig. 1 ein System zur Veranschaulichung der Erfindung.

Fig. 1 zeigt ein System zur Veranschaulichung der Erfindung. Das System umfasst ein NFC-fähiges mobiles Endgerät 10, einen elektronischen Personalausweis nPA als tragbaren Datenträger 20 und einen Computer 30. Das Endgerät 10 und der Computer 30 haben jeweils eine NFC-Schnittstelle, über die eine NFC-Verbindung zwischen dem Endgerät 10 und dem Computer 30 herstellbar ist. Mit der NFC-Schnittstelle des Computers 30 ist eine Login-Software gekoppelt. Im Endgerät 10 ist ein Sicherheitsbetriebssystem Mobicore mit einer gesicherten Laufzeitumgebung implementiert, in der ein Login-Trustlet implementiert ist. Der elektronische Personalausweis nPA hat ebenfalls eine Kontaktlosschnittstelle.

Soll mit dem Endgerät 10 ein Login (eine Zugriffsgewährung) an Computer 30 durchgeführt werden, wird in einem vorbereitenden Schritt (Pfeil Nr. 1) zunächst über eine Kontaktlosverbindung zwischen dem Endgerät 10 und dem elektronischen Personalausweis nPA 20 das Endgerät 10 mit einem zeitlich befristet gültigen Zertifikat aus dem elektronischen Personalausweis nPA 20 aufgeladen. Das Endgerät 10 ist nun für den Login bereit.

Die Login-Software des Computers 30 sendet über die NFC-Schnittstelle minütlich Polling Nachrichten als Authentisierungs-Einladungen aus. Sobald das Endgerät 10 von außerhalb des Erfassungsbereichs in den Erfassungsbereich der NFC-Schnittstelle des Computers 30 eingebracht wird, sendet die Login-Software eine durch das Einbringen provozierte Polling Nachricht als Authentisierungs-Einladung aus, so dass der Nutzer nicht auf die nächste Polling Nachricht warten muss. In Reaktion auf die Authentisierungs-Einladung sendet das Login-Trustlet das Zertifikat als Authentisierungsdaten an den Computer 30 (Pfeil Nr. 2).

Die Login-Software des Computers 30 prüft das Zertifikat und gewährt im Gutfall den Zugriff auf den Computer, d.h. loggt den Nutzer des Endgeräts 10 am Computer 30 ein.

Der Nutzer legt das Endgerät 10 neben den Computer 30, dessen Login-Software weiterhin minütlich Polling Nachrichten als Authentisierungs-Einladungen aussendet. Solange das Endgerät 10 im Erfassungsbereich des Computers 30 ist, wird minütlich eine erfolgreiche Authentisierung durchgeführt und der Zugriff bzw. Login am Computer 30 aufrechterhalten. Werden in Reaktion auf eine Polling Nachricht keine oder falsche Authentisierungsdaten am Computer 30 empfangen, wird der Zugriff zum Computer 30 gesperrt.

Sobald das Endgerät 10 wieder im Erfassungsbereich der NFC-Schnisttstelle des Computers 30 ist, wird der Zugriff wieder gewährt, d.h. der Login wiederhergestellt, dabei vorausgesetzt, dies geschieht innerhalb des Gültigkeitsraums des Zertifikats.

Falls das Endgerät 10 außerhalb des Gültigkeitszeitraums des Zertifikats in den Erfassungsbereich der NFC-Schnisttstelle des Computers 30 gebracht wird, erkennt die Login-Software des Computers 30, dass das Zertifikat nicht mehr gültig ist und verhindert den Login. Läuft das Zertifikat ab, während das Endgerät 10 am Computer 30 eingeloggt ist, wird das Endgerät 10 ausgeloggt und kann erst wieder eingeloggt werden, nachdem ein gültiges Zertifikat in das Endgerät 10 nachgeladen worden ist.

## Patentansprüche

1. Verfahren zur Zugangskontrolle zu einem Computer (30) mittels eines mobilen Endgeräts (10), wobei das mobile Endgerät (10) und der Computer (30) je eine Kontaktlosschnittstelle umfassen, wobei unter Verwendung der Kontaktlosschnittstellen mit dem mobilen Endgerät (10) eine Authentisierung gegenüber dem Computer (30) durchgeführt wird und anlässlich einer erfolgreichen Authentisierung der Zugang zum Computer (30) gewährt oder aufrechterhalten wird,
**dadurch gekennzeichnet, dass**
zur Vorbereitung der Authentisierung ein Zertifikat aus einem vom mobilen Endgerät (10) getrennten tragbaren Datenträger (20) in das mobile Endgerät (10) geladen wird,
zur Authentisierung Authentisierungsdaten, die das Zertifikat umfassen oder aus dem Zertifikat gewonnen sind, über die Kontaktlosschnittstellen vom mobilen Endgerät (10) an den Computer (30) bereitgestellt werden, wobei das Zertifikat eine zeitlich befristete Gültigkeit hat, die auf einen vorbestimmten Gültigkeitszeitraum zeitlich befristet ist, wobei anlässlich eines Versuchs der Authentisierung, der außerhalb des Gültigkeitszeitraums des Zertifikats durchgeführt wird, gefordert wird, dass erneut ein Zertifikat in das mobile Endgerät (10) geladen wird, insbesondere aus einem oder dem tragbaren Datenträger (20) in das Endgerät (10) geladen wird.

2. Verfahren nach Anspruch 1, wobei
- durch die Kontaktlosschnittstelle des Computers (30) zumindest eine Authentisierungs-Einladung ausgesendet wird, oder vorzugsweise in regelmäßigen Zeitabständen Authentisierungs-Einladungen ausgesendet werden, und
- anlässlich des Empfangens, durch die Kontaktlosschnittstelle des mobilen Endgeräts (10), einer Authentisierungs-Einladung, oder vorzugsweise anlässlich jedes Empfangens, durch die Kontaktlosschnittstelle des mobilen Endgeräts (10), einer Authentisierungs-Einladung, die Authentisierungsdaten vom mobilen Endgerät (10) an den Computer (30) bereitgestellt werden.

3. Verfahren nach Anspruch 1 oder 2, wobei
- durch die Kontaktlosschnittstelle des Computers (30) zumindest eine Authentisierungs-Einladung ausgesendet wird, oder vorzugsweise in regelmäßigen Zeitabständen Authentisierungs-Einladungen ausgesendet werden, und
- anlässlich des Empfangens, durch die Kontaktlosschnittstelle des mobilen Endgeräts (10), einer Authentisierungs-Einladung oder zumindest mancher Authentisierungs-Einladungen durch die Kontaktlosschnittstelle des mobilen Endgeräts (10), einer Authentisierungs-Einladung, eine Nutzereingabe angefordert wird, wobei anlässlich des Eingebens der geforderten Nutzereingabe in das Endgerät (10) die Authentisierungsdaten vom mobilen Endgerät (10) an den Computer (30) bereitgestellt werden.

4. Verfahren nach einem der Ansprüche 1 bis 3, wobei das mobile Endgerät (10), während die Authentisierung durchgeführt wird oder/ und während die Authentisierungs-Einladung empfangen wird, in einem stromsparenden Modus mit eingeschränkter Funktionalität des Endgeräts betrieben wird.

5. Verfahren nach einem der Ansprüche 1 bis 4, wobei das mobile Endgerät (10) zur Authentisierung, insbesondere anlässlich des Empfangens einer Authentisierungs-Einladung gemäß Anspruch 2 oder 3, aus einem extrem stromsparenden ersten Modus mit extrem eingeschränkter Funktionalität des Endgeräts (10) in einen zweiten Modus versetzt wird, in dem zumindest die Durchführung der Authentisierung möglich ist.

6. Verfahren nach einem der Ansprüche 1 bis 5, wobei das mobile Endgerät (10) eine gesicherte Laufzeitumgebung umfasst, und wobei das Zertifikat unter Verwaltung der gesicherten Laufzeitumgebung in das mobile Endgerät (10) geladen wird und die Authentisierungsdaten unter Verwaltung der gesicherten Laufzeitumgebung an den Computer (30) bereitgestellt werden.

7. Verfahren nach einem der Ansprüche 1 bis 6, wobei als tragbarer Datenträger (20) ein elektronisches Identifikationsdokument (nPA, ePass) verwendet wird, und wobei wahlweise das Zertifikat in dem Datenträger (20) erstellt wird.

8. Verfahren nach einem der Ansprüche 1 bis 7, wobei das Bereitstellen der Authentisierungsdaten vom Endgerät (10) an den Computer (30) durch eine Eingabe am Endgerät (10) veranlasst wird.

## Claims

1. A method for access control to a computer (30) by means of a mobile end device (10), wherein the mobile end device (10) and the computer (30) each comprise a contactless interface, wherein, using the contactless interfaces, an authentication to the computer (30) is carried out with the mobile end device (10) and upon a successful authentication the access to the computer (30) is granted or maintained,
**characterized in that**
for preparing the authentication, a certificate is loaded into the mobile end device (10) from a portable data carrier (20) separate from the mobile end device (10),
for authentication, authentication data comprising the certificate or obtained from the certificate are made available to the computer (30) from the mobile end device (10) via the contactless interfaces, wherein the certificate has a limited-time validity which is limited in time for a predetermined period of validity, wherein upon an attempt of authentication which is carried out outside the period of validity of the certificate, it is requested that a certificate is loaded into the mobile end device (10) anew, in particular loaded from a or the portable data carrier (20) into the end device (10).

2. The method according to claim 1, wherein
- by the contactless interface of the computer (30) there is sent at least one authentication invitation or are preferably sent authentication invitations in regular time intervals, and
- upon the receiving, by the contactless interface of the mobile end device (10), of an authentication invitation or preferably upon each receiving, by the contactless interface of the mobile end device (10), of an authentication invitation, the authentication data are made available to the computer (30) from the mobile end device (10).

3. The method according to claim 1 or 2, wherein
- by the contactless interface of the computer (30) there is sent at least one authentication invitation or are preferably sent authentication invitations in regular time intervals, and
- upon the receiving, by the contactless interface of the mobile end device (10), of an authentication invitation or of at least some authentication invitations by the contactless interface of the mobile end device (10), of an authentication invitation, a user input is requested, wherein upon the entering of the requested user input into the end device (10) the authentication data are made available to the computer (30) from the mobile end device (10).

4. The method according to any of claims 1 to 3, wherein, while the authentication is carried out or/and while the authentication invitation is received, the mobile end device (10) is operated in a power-saving mode with restricted functionality of the end device.

5. The method according to any of claims 1 to 4, wherein for authentication, in particular upon the receiving of an authentication invitation according to claim 2 or 3, the mobile end device (10) is shifted from an extremely power-saving first mode with extremely restricted functionality of the end device (10) to a second mode in which at least the carrying out of the authentication is possible.

6. The method according to any of claims 1 to 5, wherein the mobile end device (10) comprises a secured runtime environment, and wherein the certificate is loaded into the mobile end device (10) under the management of the secured runtime environment and the authentication data are made available to the computer (30) under the management of the secured runtime environment.

7. The method according to any of claims 1 to 6, wherein an electronic identification document (nPA, ePass) is employed as a portable data carrier (20), and wherein the certificate is selectively created in the data carrier (20).

8. The method according to any of claims 1 to 7, wherein the making available of the authentication data by the end device (10) to the computer (30) is prompted by an input at the end device (10).

## Revendications

1. Procédé de contrôle d'accès à un ordinateur (30) au moyen d'un terminal (10) mobile, cependant que le terminal (10) mobile et l'ordinateur (30) comprennent chacun une interface sans contact, cependant que, en utilisant les interfaces sans contact, une authentification vis-à-vis de l'ordinateur (30) est exécutée avec le terminal (10) mobile, et que, à l'occasion d'une authentification aboutie, l'accès à l'ordinateur (30) est accordé ou maintenu,
**caractérisé en ce que**
pour la préparation de l'authentification, un certificat provenant d'un support de données (20) portable distinct du terminal (10) mobile est chargé dans le terminal (10) mobile, pour l'authentification, des données d'authentification qui comprennent le certificat ou qui sont obtenues à partir du certificat sont mises à la disposition de l'ordinateur (30) par le terminal (10) mobile par l'intermédiaire des interfaces sans contact,
cependant que le certificat a une validité limitée dans le temps qui est limitée dans le temps pour une période de validité prédéterminée, cependant que, à l'occasion d'une tentative d'authentification exécutée hors de la période de validité du certificat, il est exigé qu'à nouveau un certificat soit chargé dans le terminal (10) mobile, en particulier soit chargé dans le terminal (10) à partir d'un ou du support de données (20) portable.

2. Procédé selon la revendication 1, cependant que
- par l'intermédiaire de l'interface sans contact de l'ordinateur (30), au moins une invitation à authentification est envoyée, ou, de préférence, à des intervalles de temps réguliers, des invitations à authentification sont envoyées, et
- à l'occasion de la réception, par l'interface sans contact du terminal (10) mobile, d'une invitation à authentification, ou, de préférence, à l'occasion de chaque réception, par l'interface sans contact du terminal (10) mobile, d'une invitation à authentification, les données d'authentification sont mises à la disposition de l'ordinateur (30) par le terminal (10) mobile.

3. Procédé selon la revendication 1 ou 2, cependant que
- par l'intermédiaire de l'interface sans contact de l'ordinateur (30), au moins une invitation à authentification est envoyée, ou, de préférence, à des intervalles de temps réguliers, des invitations à authentification sont envoyées, et
- à l'occasion de la réception, par l'interface sans contact du terminal (10) mobile, d'une invitation à authentification ou au moins de certaines invitations à authentification par l'interface sans contact du terminal (10) mobile, une entrée utilisateur est demandée, cependant que, à l'occasion de l'entrée utilisateur exigée dans le terminal (10) mobile, les données d'authentification sont mises à la disposition de l'ordinateur (30) par le terminal (10) mobile.

4. Procédé selon une des revendications de 1 à 3, cependant que le terminal (10) mobile, pendant que l'authentification est exécutée ou/et pendant que l'invitation à authentification est reçue, fonctionne dans un mode consommant peu de courant à fonctionnalité restreinte du terminal mobile.

5. Procédé selon une des revendications de 1 à 4, cependant que le terminal (10) mobile, pour l'authentification, en particulier à l'occasion de la réception d'une invitation à authentification selon la revendication 2 ou 3, est, depuis un premier mode consommant extrêmement peu de courant, à fonctionnalité extrêmement restreinte du terminal (10) mobile, mis dans un deuxième mode dans lequel au moins l'exécution de l'authentification est possible.

6. Procédé selon une des revendications de 1 à 5, cependant que le terminal (10) mobile comprend un environnement d'exécution sécurisé, et cependant que le certificat est chargé dans le terminal (10) mobile en gérant l'environnement d'exécution sécurisé et que les données d'authentification sont mises à la disposition de l'ordinateur (30) en gérant l'environnement d'exécution sécurisé.

7. Procédé selon une des revendications de 1 à 6, cependant que, en tant que support de données (20) portable, un document électronique d'identification (nPA, ePass) est utilisé, et cependant que, au choix, le certificat est établi dans le support de données (20).

8. Procédé selon une des revendications de 1 à 7, cependant que la mise des données d'authentification à la disposition de l'ordinateur (30) par le terminal (10) est provoqué par une entrée au terminal (10).
